# EUROPÄISCHE PATENTSCHRIFT

(11) **EP 0 565 974 B1**
(45) Veröffentlichungstag und Bekanntmachung des Hinweises auf die Patenterteilung: **09.08.1995**
(21) Anmeldenummer: 93105546.1
(22) Anmeldetag: 03.04.1993
(51) Int. Cl.: B29B 7/76, B29C 44/02, B29K 75/00

(54) **Verfahren zur kontinuierlichen Steuerung der Zellenzahl von Polyurethan-Schaumstoffen**
Process for the continuous control of the number of cells of polyurethane foams
Procédé pour la commande continue de nombre de cellules de mousses de polyuréthane

(30) Priorität: 03.04.1992 DE 4211080
(43) Veröffentlichungstag der Anmeldung: 20.10.1993
(73) Patentinhaber: KOEPP AKTIENGESELLSCHAFT, D-65375 Oestrich-Winkel (DE)
(72) Erfinder: Wetzig, Ulrich, W-6220 Rüdesheim (DE); Hohenhorst, Manfred, Dr., W-7956 Rot a.d. Rot (DE)
(74) Vertreter: Werner, Hans-Karsten, Dr.Dipl.-Chem.

(56) Entgegenhaltungen:
- EP-A- 0 332 032
- EP-A- 0 344 501
- EP-A- 0 379 015
- WO-A-92/01738
- DE-A- 2 446 089
- DE-A- 3 920 994
- FR-A- 2 292 523

## Beschreibung

Gegenstand der vorliegenden Erfindung ist ein Verfahren zur kontinuierlichen Steuerung der Zellenzahl bei der Produktion von Polyurethan-Schaumstoffen aus Polyolen, Isocyanaten und Wasser, wobei die Vermischung der Komponenten in einem Mischkopf mit einstellbarem Einspritzdruck und einstellbarem Mischkammerdruck erfolgt.

Aus der DE-A-24 40 022 sind ein Verfahren und eine Vorrichtung bekannt zur Herstellung von Dämm- und Leichtbaustoffen aus kalt- oder warmhärtbaren Reaktions- und/oder Kondensationsharzen, wobei das Harz in einem Druckbehälter mit der erforderlichen Menge eines Treibmittels beladen und der Schaum durch Entspannen der Gemische erzeugt wird. Hierbei wird die Beladung des Harzes mit dem Treibmittel beschleunigt, indem unter Verzicht auf sich bewegende Rühraggregate die Grenzfläche Gas/Flüssigkeit vergrößert wird. Dabei entsteht bereits mechanisch ein Schaum aus der einen Komponente und dem Treibmittel. Dieser vorgefertigte Schaum wird dann mit der zweiten Komponente vermischt. Die endgültige Schaumerzeugung erfolgt dann durch Entspannen und Härten des Gemisches.

Aus der DE-A-39 20 994 ist eine verbesserte Vorrichtung zum Herstellen eines Reaktionsgemisches aus mindestens zwei Komponenten für die Produktion von Schaumstoffen bekannt, bei der mindestens eine der Zuleitungen eine Gasbeladungseinrichtung aufweist mit einem Gasbeladungsmeßgerät und einem Volumenstromzähler. Hierbei besteht die Gasbeladungseinrichtung aus einem speziellen Statikmischer, und die Gaszufuhr wird über ein Ventil geregelt. Die Schaumerzeugung erfolgt auch hierbei ausschließlich mittels des zugesetzten Gases in der dafür erforderlichen Menge.

Bei Polyurethan-Schaumstoffen erfolgt die Schaumbildung nicht durch zugesetzte Gase oder Treibmittel, sondern durch Kohlendioxid als Treibgas, welches aus dem Isocyanat und Wasser entsteht, wobei im übrigen die Polyaddition von Isocyanat und Polyol erfolgt. Im allgemein bekannten Stand der Technik, auf den sich der Oberbegriff des Anspruchs 1 stützt, wird die Zellenzahl dadurch variiert, daß der Einspritzdruck des Isocyanats in die Mischkammer und/oder der Mischkammerdruck selbst variiert wird. Um feinporige Schäume zu erhalten, wird der Einspritzdruck erhöht und der Mischkammerdruck erniedrigt. Um grobe Zellen zu erhalten, wird der Einspritzdruck des Isocyanats erniedrigt und der Mischkammerdruck erhöht. Diesen Maßnahmen sind jedoch insbesondere wegen der auftretenden Dichtungsprobleme an der Rührwelle Grenzen gesetzt. Weiterhin sind diese Einstellungen nicht reproduzierbar und müssen stets neu optimiert werden.

Eine weitere Maßnahme, gröberzellige Schäume aus Polyurethan zu erzeugen, besteht darin, das eingesetzte Isocyanat zu entgasen. Dies erfolgt beispielsweise durch längere Lagerung im Vorratstank vorzugsweise bei vermindertem Druck. Es handelt sich um eine Maßnahme, die viel Zeit und Platz benötigt und dementsprechend kostspielig ist. Die im Isocyanat gelöste Gasmenge ist im Verhältnis zu dem sich bildenden Kohlendioxid sehr gering, wirkt aber allem Anschein nach wie ein Keimbildner für Gasblasen und beeinflußt dadurch die Zellgröße der Schäume. Das Isocyanat enthält unmittelbar nach der Fertigung kaum oder keine gelösten Gase, nimmt aber bei Lagerung und Transport zeitabhängig unbestimmte Luftmengen durch Lösung auf. Es finden sich daher im Arbeitstank des Verbrauchers meist unregelmäßige Schichten von Isocyanat unterschiedlicher Luftkonzentration, was zu unvorhersehbaren Schwankungen der Zellenzahl bei der Schaumfertigung führen kann.

Die Erfindung hat sich die Aufgabe gestellt, die Zellenzahl bei der Produktion von Polyurethan-Schaumstoffen aus Polyolen, Isocyanaten und Wasser kontinuierlich zu steuern, wobei die Vermischung der Komponenten nach wie vor in einem Mischkopf mit einstellbarem Einspritzdruck und einstellbarem Mischkammerdruck erfolgen soll.

Es wurde jetzt gefunden, daß diese Aufgabe besonders einfach und elegant dadurch gelöst werden kann, daß der Gasgehalt des Isocyanats vor dem Eintritt in den Mischkopf kontinuierlich erhöht oder erniedrigt wird. Diese Erhöhung oder Verminderung des Gasgehalts des Isocyanats erfolgt vorzugsweise in einer Durchflußkammer mit regulierbarem Überdruck oder Unterdruck, wobei das Isocyanat als dünner Film durch die Durchflußkammer hindurchfließt.

Besonders bevorzugt erfolgt die Erhöhung oder Verminderung des Gasgehaltes des Isocyanats dadurch, daß die Durchflußkammer als Zentrifuge ausgestaltet ist mit mehreren koaxialen Ringkammern.

Dieses Ergebnis war in dieser Form nicht vorhersehbar, da es zwar bekannt war, daß man viskose Flüssigkeiten im Vakuum entgasen kann und diese Entgasung rascher erfolgt, wenn die Oberfläche der Flüssigkeit vergrößert wird, es war jedoch nicht vorherzusehen, daß unter den gleichen Bedingungen durch Erhöhung des Drucks auch rasch Gas in die Flüssigkeit eingebracht werden kann.

Die Vergrößerung der Oberflächen kann beispielsweise auch durch Versprühen der Flüssigkeit erfolgen. Eine Aufladung der Flüssigkeit mit Gas ist unter diesen Bedingungen nicht gelungen. Wesentlich bessere und reproduzierbarere Ergebnisse werden erzielt, wenn das Isocyanat als dünner Film durch eine Durchflußkammer hindurchfließt, wobei die Verweilzeit und die Dicke des Filmes Einfluß haben auf die Entgasung bzw. Beladung mit Gas.

Optimale Ergebnisse werden insbesondere erzielt, wenn die Durchflußkammer als Zentrifuge ausgestaltet ist mit mehreren koaxialen Ringkammern. Derartige Zentrifugen sind beschrieben in Fat Sci. Technol., 90. Jahrgang, Seiten 529 bis 532. Sie sind ursprünglich entwickelt worden zum Entgasen von Flüssigkeiten und zur Zerstörung von Schäumen. Die zu entgasende Flüssigkeit wird dabei der Mitte zugeführt und durchläuft nacheinander die koaxialen Kammern von unten nach oben oder umgekehrt. Das freigesetzte Gas entweicht und tritt durch die Entgasungsöffnungen aus und wird durch eine Vakuumpumpe abgesaugt. Es wurde jetzt festgestellt, daß erstaunlicherweise unter gleichen Bedingungen auch eine rasche und gleichmäßige Begasung möglich ist. Ein weiterer Vorteil dieser Ausgestaltung des Verfahrens besteht darin, daß durch Variation der Drehzahl der Zentrifuge die Filmdicke und die Verweilzeit variiert werden können, so daß sowohl Entgasung wie Begasung in weiten Grenzen variiert werden können. Besonders überraschend war der Befund, daß der Grad der Begasung oder Entgasung reproduzierbar eingestellt werden kann und damit die Zellenzahl vor Produktionsbeginn in relativ engen Grenzen vorherbestimmt werden kann. Während der Produktion wird die gewünschte Zellenzahl gesteuert über den Gasgehalt des Isocyanats. Dieser wiederum wird vor allem durch den Gasdruck in der Zentrifuge gesteuert. Alle übrigen Parameter, wie Einspritzdruck, Mischkammerdruck und sogar die Tourenzahl der Zentrifuge werden je nach gewünschten Produktionsbedingungen konstant gehalten.

Um besonders grobporigen Schaum zu erhalten, wird demgemäß bei sehr niedrigem Gasdruck entgast. Um besonders feinporigen Schaum zu erhalten, wird hingegen bei Überdruck begast.

Die erfindungsgemäße kontinuierliche Steuerung der Zellenzahl über den Gasgehalt des Isocyanats macht es somit erforderlich, nur noch die Zellenzahl zu überwachen und Abweichungen von der gewünschten Zellenzahl durch entsprechende Veränderung des Gasgehaltes zu korrigieren. Da es prinzipiell möglich ist, die Zellenzahl auch automatisch und kontinuierlich zu messen, können diese Meßwerte auch dazu verwertet werden, den Gasgehalt automatisch zu steuern.

Es versteht sich von selbst, daß das erfindungsgemäße Verfahren für die verschiedensten Arten von Polyolen einerseits und Isocyanat andererseits eingesetzt werden kann. Als Isocyanat wird vor allem das Toluol-diisocyanat (TDI) eingesetzt, jedoch sind für das erfindungsgemäße Verfahren auch andere Isocyanate verwendbar.

Um den Gasgehalt im Isocyanat zu erhöhen oder zu vermindern, kann es in einigen Fällen auch genügen, nur einen Teilstrom des eingesetzten Materials zu entgasen oder zu begasen und diesen Teilstrom vor dem Eintritt in die Mischkammer mit dem unveränderten Hauptstrom homogen zu vermischen. Diese Ausgestaltung wird man vor allem dann wählen, wenn Schaumstoffe mittlerer Zellenzahl in großen Mengen hergestellt werden sollen und dementsprechend große Mengen an Isocyanat bezüglich des Gasgehaltes eingestellt werden müssen.

Als Gas für die Begasung kann im einfachsten Fall Luft verwendet werden. Es ist jedoch prinzipiell möglich, die Begasung und Entgasung mit einem inerten Gas, wie Stickstoff oder Kohlendioxid, durchzuführen.

Die Vorteile des erfindungsgemäßen Verfahrens gegenüber den bisher durchgeführten Verfahrensmaßnahmen sind einleuchtend. Beispielsweise sinken die Kosten für Fehlchargen beim Anfahren der Anlage auf einen Bruchteil. Es entfällt die Notwendigkeit, den Einspritzdruck und/oder den Mischkammerdruck in Extrembereichen einzustellen, die zu Dichtungsproblemen, verminderter Produktionskapazität und erhöhtem Verschleiß bei den Einspritzpumpen führen können. Die erfindungsgemäße kontinuierliche Steuerung erfolgt nahezu verzögerungsfrei, so daß bei entsprechender Überwachung der Zellenzahl weitere Fehlchargen vermieden werden können. Schwankungen im Gasgehalt der angelieferten Rohstoffe können leicht ausgesteuert werden, da die gewünschte Gasbeladung unabhängig vom ursprünglichen Gasgehalt erfolgt. Schließlich ist es möglich, die Zellenzahl auch während der Produktion und ohne Unterbrechung der Produktion stark zu verändern und dadurch unterschiedliche Kundenwünsche bezüglich der Zellenzahl im Form relativ kleiner Chargen erfüllen zu können.

Schließlich ist es erfindungsgemäß möglich, durch Variation sonstiger Parameter nicht nur offenzellige, sondern auch geschlossenzellige Polyurethan-Schäume herzustellen. Es handelt sich somit um ein Verfahren, welches sehr allgemein und für die verschiedensten Zwecke eingesetzt werden kann.

Durch das erfindungsgemäße Verfahren ist es somit erstmals gelungen, ein altes und fundamentales Problem der Polyurethan-Schaumfertigung zu lösen, nämlich die vorwählbar und reproduzierbar einstellbare und wahlweise variable Einstellung der Zellenzahl in fortlaufend produzierten Polyurethan-Schaumsträngen, dazu in einer bisher unerreichten Breite der Variationsmöglichkeit. Da dieses Verfahren ohne Störung der kontinuierlichen Fertigung und ohne wesentliche laufende Mehrkosten durchführbar ist, ergeben sich wesentliche wirtschaftliche Vorteile durch Vermeidung von Ausschuß und die erweiterte Angebotspalette.

Zur Herstellung der Schaumstoffe auf Isocyanatbasis werden als Ausgangskomponente aliphatische, cycloaliphatische, araliphatische, aromatische oder heterocyclische Polyisocyanate eingesetzt, wie sie zum Beispiel von W. Siefken in Justus Liebigs Annalen der Chemie 562, Seiten 75 bis 136 beschrieben werden, beispielsweise solche der Formel Q(NCO)ₙ, in der n = 2 bis 4, vorzugsweise 2 bis 3 ist und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeutet, zum Beispiel solche Polyisocyanate, wie sie in der DE-A-28 32 253, Seiten 10 bis 11 beschrieben werden. Besonders bevorzugt sind technisch leicht zugängliche Polyisocyanate, zum Beispiel 2,4- und 2,6-Toluylendiisocyanat sowie deren Gemische ("TDI"); Polyphenyl-polymethylenpolyisocyanate, wie sie durch Anilin-Formaldehyd-Kondensation und anschließende Phosgenierung hergestellt werden können ("rohes MDI") und Carbodiimid, Urethan, Allophanat-, Isocyanurat-, Harnstoff- oder Biuretgruppen aufweisenden Polyisocyanate ("modifizierte Polyisocyanate"), insbesondere solche modifizierten Polyisocyanate, die sich von 2,4- oder 2,5-Toluylendiisocyanat bzw. vom 4,4- oder 2,4-Diphenylmethandiisocyanat ableiten.

Ausgangskomponenten sind ferner Verbindungen mit mindestens zwei gegenüber Isocyanatgruppen reaktionsfähigen Wasserstoffatomen mit einem Molekulargewicht von üblicherweise 400 bis 10000. Hierunter sind neben Amino-, Thiol- oder Carboxylgruppen aufweisenden Verbindungen vorzugsweise Hydroxylgruppen aufweisende Verbindungen zu verstehen, insbesondere 2 bis 8 Hydroxylgruppen aufweisende Verbindungen, besonders solche vom Molekulargewicht 1000 bis 6000, vorzugsweise 2000 bis 6000, zum Beispiel mindestens 2, üblicherweise 2 bis 8, vorzugsweise 2 bis 6 Hydroxylgruppen aufweisende Polyether und Polyester sowie Polycarbonate und Polyesteramide, wie sie für die Herstellung von homogenen und zellförmigen Polyurethanen an sich bekannt sind und wie sie zum Beispiel in der DE-A-28 32 253, Seiten 11 bis 18 beschrieben werden. Die mindestens zwei Hydroxylgruppen aufweisenden Polyester sind zur Verwendung im erfindungsgemäßen Verfahren bevorzugt.

Gegebenenfalls werden als weitere Ausgangskomponenten Verbindungen mit mindestens zwei gegenüber Isocyanaten reaktionsfähigen Wasserstoffatomen und einem Molekulargewicht von 30 bis 400 eingesetzt, wobei hierunter ebenfalls Hydroxyl-, Amino-, Thiol- und/oder Carboxylgruppen aufweisende Verbindungen, vorzugsweise Hydroxyl- und/oder Aminogruppen aufweisende Verbindungen, welche als Kettenverlängerungsmittel oder Vernetzungsmittel dienen können, verstanden werden. Derartige Verbindungen weisen im allgemeinen 2 bis 8, vorzugsweise 2 bis 4 gegenüber Isocyanaten reaktionsfähige Wasserstoffatome auf. Beispiele werden in der DE-A-27 32 292, Seiten 21 bis 24 beschrieben.

Wasser und/oder leicht flüchtige organische Substanzen oder während der Reaktion freigesetzte Gase wie zum Beispiel Stickstoff können als Treibmittel zur Erzielung der Schaumstruktur eingesetzt werden.

Gegebenenfalls werden Hilfs- und Zusatzmittel mitverwendet wie beispielsweise Katalysatoren, oberflächenaktive Zusatzstoffe wie Emulgatoren und Schaumstabilisatoren, Reaktionsverzögerer wie beispielsweise sauer reagierende Stoffe, wie Salzsäure oder organische Säurehalogenide, ferner übliche Zellregler, Paraffine, Fettalkohole oder Dimethylpolysiloxane sowie Pigmente oder Farbstoffe und bekannte Flammschutzmittel, zum Beispiel Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide. Beispiele von gegebenenfalls mitzuverwendenden Hilfs- und Zusatzstoffen werden beispielsweise in der DE-A-27 32 292, Seiten 21 bis 24 beschrieben.

Weitere Beispiele von gegebenenfalls im erfindungsgemäßen Verfahren mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirkenden Substanzen sowie Einzelheiten über Verwendungs- und Wirkungsweise dieser Zusatzmittel sind zum Beispiel dem Kunstoff-Handbuch, Band VII (Hrsg.: Vieweg und Höchtlen), Carl-Hanser-Verlag München (1966), Seiten 103 bis 113 zu entnehmen.

Zur Durchführung des erfindungsgemäßen Verfahrens zur Herstellung von Polyurethan-Schaumstoffen werden die Reaktionskomponenten nach dem bekannten Einstufen-, Prepolymer- oder Semiprepolymerverfahren zur Umsetzung gebracht, wobei man sich oft maschineller Einrichtungen bedient, zum Beispiel solcher, die in der US-P-2,764,565 beschrieben werden. Einzelheiten über Verarbeitungseinrichtungen, die im erfindungsgemäßen Verfahren benützt werden können, sind zum Beispiel im Kunstoff-Handbuch, Band VII (Hrsg.: Vieweg und Höchtlen), Carl-Hanser-Verlag München (1966) auf den Seiten 121 bis 205 beschrieben.

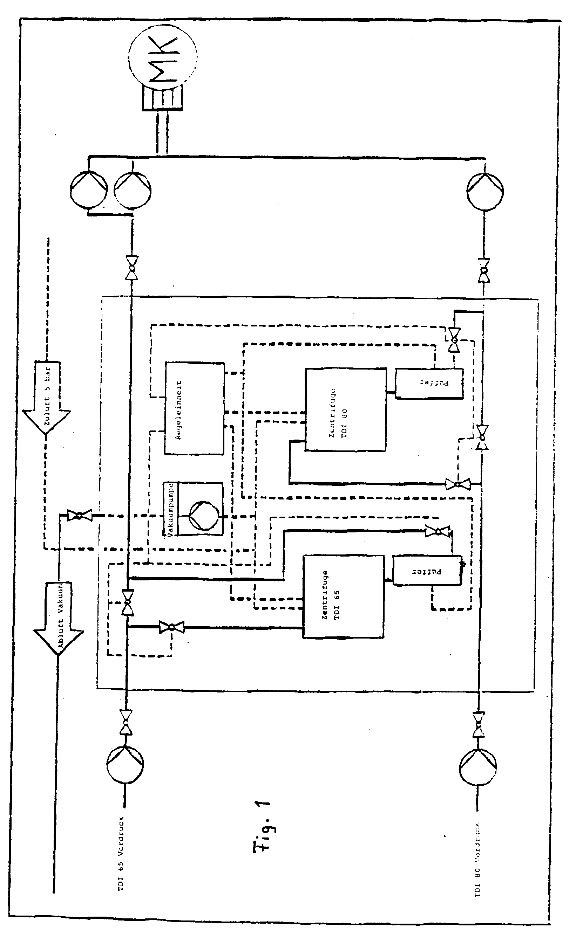

Die Anordnung der Zentrifuge innerhalb einer handelsüblichen UBT-Verschäumungsanlage ist in Figur 1 (Funktionsschema TDI - Entgasung - Begasung) aufgezeigt.

Die Steuerung der Zellgröße eines Polyurethan-Schaumstoffes wird bei gewählter Formulierung durch den Arbeitsdruck der Zentrifuge erreicht. Dazu dienen die nachstehend augeführten Beispiele, ohne dabei den Schutzumfang der Erfindung auf diese Beispiele zu begrenzen.

### Beispiel 1

Auf der oben erwähnten Anlage wird ein Reaktionsgemisch, bestehend aus
100 Gew.-Teilen eines teilverzweigten Polyesters mit
einer OH-Zahl von 60 auf Basis von Adipinsäure, Diethylenglykol und Trimethylolpropan, 4,0 Gew.-Teilen Wasser,
0,7 Gew.-Teilen eines tert.-Amin-Aktivatorgemisches (Desmorapid DB, Bayer AG),
0,3 Gew.-Teilen eines tert.-Amin-Aktivatorgemisches (Niax A 30, UCC),
1,4 Gew.-Teilen des Stabilisators B 8300 (Th. Goldschmidt, Silikonbasis)
51 Gew.-Teilen eines Gemisches, bestehend aus 44 Gew.-% eines Gemisches aus 80 Gew.-% 2,4- und 20 Gew.-% 2,6-Toluylendiisocyanat und 56 Gew.-% eines Gemisches aus 65 Gew.-% 2,4- und 35 Gew.-% 2,6-Toluylendiisocyanat
zu einem Block der Höhe von 52 cm, Länge von 6000 cm und einer Breite von 140 cm verschäumt. Bei der Herstellung wird die Zentrifuge mit einer mittleren Umdrehungszahl von 1500 U/min gefahren, der Arbeitsdruck beträgt im Fall A 600 mbar und im Fall B 200 mbar. Der Mischkammer(MK)-druck beträgt in beiden Fällen 2,0 bar, der Arbeitsdruck des Toluylendiisocyanats (TDI-P) beträgt 65 bar. Im Fall A weist der Schaumstoff eine Zellenzahl von 45 ppi auf, während im Fall B eine Zellenzahl von 25 ppi fstgestellt wird.

### Beispiel 2

Die Zellenzahl eines Polyurethan-Schaumstoffes beträgt 90 ppi; er wurde nach folgender Rezeptur und nachstehender Maschineneinstellung erhalten:
100 Gew.-Teile eines Polyesters gemäß Beispiel 1,
2,1 Gew.-Teile Wasser
1,0 Gew.-Teile eines tert.-Amin-Aktivatorgemisches (KST 100, UCC),
1,4 Gew.-Teile Stabilisator gemäß Beispiel 1
werden gemäß Beispiel 1 mit 35,5 Gew.-Teilen des Polyisocyanatgemisches aus Beispiel 1 zu einem Schaumstoffblock verarbeitet. Die Maschineneinstellung lautet:

| | |
|---|---|
| Drehzahl Zentrifuge: | 1500 U/min |
| Arbeitsdruck Zentrifuge: | 1500 mbar |
| Mischkammerdruck: | 2,4 bar |
| Arbeitsdruck TDI: | 80 bar. |

### Beispiel 3

100 Gew.-Teile eines trifunktionell, mit Ethylenoxid modifizierten Polyetherpolyols einer OH-Zahl von 46,
4,5 Gew.-Teile Wasser,
0,1 Gew.-Teile eines tert.-Amin-Aktivators (Polycat 77, Air Products),
0,2 Gew.-Teile Dimethanolamin,
1,0 Gew.-Teile des Stabilisators B 2370 (Th. Goldschmidt)
0,13 Gew.-Teile Zinn(II)octoat
51,0 Gew.-Teile eines Gemisches, bestehend aus 80 Gew.-% 2,4- und 20 Gew.-% 2,6-Toluylendiisocyanat
werden zu einem Schaumstoffblock verschäumt.

Die Maschinenparameter wurden wie nachstehend aufgeführt vorgewählt:

| | Fall A | Fall B |
|---|---|---|
| Drehzahl Zentrifuge: | 1500 U/min | 1500 U/min |
| Arbeitsdruck Zentrifuge: | 200 mbar | 650 mbar |
| Mischkammerdruck: | 1,3 bar | 1,3 bar |
| Arbeitsdruck TDI: | 80 bar | 80 bar. |

Daraus resultierten unterschiedliche Zellengrößen. Im Fall A ergibt sich eine Zellenzahl von 30 ppi, im Fall B von 45 ppi.

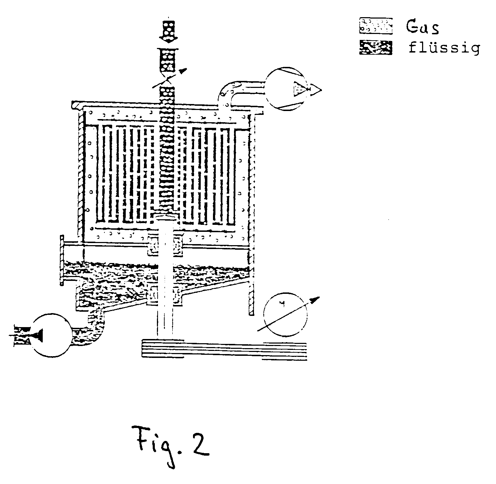

Die benutzte Zentrifuge ist in Figur 2 dargestellt.

## Patentansprüche

1. Verfahren zur kontinuierlichen Steuerung der Zellenzahl bei der Produktion von Polyurethan-Schaumstoffen aus Polyolen, Isocyanaten und Wasser, wobei die Vermischung der Komponenten in einem Mischkopf mit einstellbarem Einspritzdruck und einstellbarem Mischkammerdruck erfolgt, dadurch gekennzeichnet, daß vor dem Eintritt in den Mischkopf der Gasgehalt des Isocyanats kontinuierlich erhöht oder vermindert wird.

2. Verfahren gemäß Anspruch 1, dadurch gekennzeichnet, daß die Erhöhung oder Verminderung des Gasgehalts des Isocyanats erfolgt in einer Durchflußkammer mit regulierbarem Überdruck und Unterdruck, durch welche das Isocyanat als dünner Film hindurchfließt.

3. Verfahren gemäß Anspruch 1 oder 2, dadurch gekennzeichnet, daß die Durchflußkammer als Zentrifuge ausgestaltet ist mit mehreren koaxialen Ringkammern.

## Claims

1. A process for continuous control of cell number in the production of polyurethane foams from polyols, isocyanates and water, where component mixing is effected in a mixing head with adjustable injection pressure and adjustable mixing chamber pressure, characterized in that prior to entering the mixing head the gas content of the isocyanate is continuously increased or reduced.

2. The process according to claim 1, characterized in that increasing or reducing the gas content of the isocyanate is effected in a flow chamber with adjustable excess and reduced pressure, through which chamber the isocyanate flows as a thin film.

3. The process according to claim 1 or 2, characterized in that the flow chamber is designed as a centrifuge having several coaxial ring chambers.

## Revendications

1. Procédé pour commander en continu le nombre d'alvéoles lors de la production de mousses de polyuréthane à partir de polyols, d'isocyanates et d'eau, dans lequel le mélange des composants se déroule dans une tête de mélange avec une pression réglable d'injection et une pression réglable dans la chambre de mélange, caractérisé en ce que la teneur en gaz de l'isocyanate est augmentée ou diminuée en continu avant son entrée dans la tête de mélange.

2. Procédé selon la revendication 1, caractérisé en ce qu'on effectue l'augmentation ou la diminution de la teneur en gaz de l'isocyanate dans une chambre de circulation dont la surpression et le vide partiel peuvent être régulés, et dans laquelle l'isocyanate s'écoule sous la forme d'un film mince.

3. Procédé selon la revendication 1 ou 2, caractérisé en ce que la chambre de circulation est constituée comme une centrifugeuse avec plusieurs chambres annulaires coaxiales.
